# EUROPÄISCHE PATENTSCHRIFT

(11) **EP 3 847 050 B1**
(45) Veröffentlichungstag und Bekanntmachung des Hinweises auf die Patenterteilung: **17.05.2023**
(21) Anmeldenummer: 19725974.0
(22) Anmeldetag: 21.05.2019
(51) Int. Cl.: B60K 37/06, G02B 27/01

(54) **VERFAHREN UND STEUEREINRICHTUNG ZUM BETREIBEN EINER AM KOPF TRAGBAREN ANZEIGEEINRICHTUNG IN EINEM KRAFTFAHRZEUG**
METHOD AND CONTROL DEVICE FOR OPERATING A DISPLAY DEVICE WHICH CAN BE WORN ON THE HEAD IN A MOTOR VEHICLE
PROCÉDÉ ET DISPOSITIF DE COMMANDE POUR FAIRE FONCTIONNER UN DISPOSITIF D'AFFICHAGE PORTABLE SUR LA TÊTE DANS UN VÉHICULE AUTOMOBILE

(30) Priorität: 07.09.2018 DE 102018215265
(43) Veröffentlichungstag der Anmeldung: 14.07.2021
(73) Patentinhaber: Audi AG, 85049 Ingolstadt (DE)
(72) Erfinder: KÜHNE, Marcus, 92339 Beilngries (DE)
(74) Vertreter: Hofstetter, Schurack & Partner
(86) Internationale Anmeldenummer: PCT/EP2019/063018
(87) Internationale Veröffentlichungsnummer: WO 2020/048647

(56) Entgegenhaltungen:
- DE-A1-102016 003 019
- US-A1- 2018 014 182

## Beschreibung

Die Erfindung betrifft ein Verfahren und eine Steuereinrichtung zum Betreiben einer am Kopf tragbaren Anzeigeeinrichtung in einem Kraftfahrzeug. Des Weiteren betrifft die Erfindung noch ein Kraftfahrzeug mit einer solchen Steuereinrichtung.

In absehbarer Zeit wird es möglich sein, in Kraftfahrzeugen zu Unterhaltungszwecken Virtual-Reality-Brillen oder Augmented-Reality-Brillen zu tragen und mittels diesen unterschiedliche Inhalte zu genießen. Derartige Unterhaltungsoptionen sind während der Fahrt - insbesondere noch vor der Verfügbarkeit autonomen Fahrens - eher für Mitfahrer aber weniger für einen Fahrer selbst angedacht.

Die DE 10 2013 221 858 A1 zeigt ein Verfahren zum Betreiben einer Datenbrille in einem Kraftfahrzeug. Wenn festgestellt wird, dass ein Sitzplatz, welcher der Datenbrille zugeordnet ist, der Fahrersitzplatz des Fahrzeugs ist, wird eine Übertragung von Nutzdaten, insbesondere von Grafik- oder Videodaten, zu der Datenbrille unterbunden. Dies erfolgt insbesondere dann, wenn nicht sicher festgestellt werden kann, dass die Datenbrille vom Fahrer nicht in einer an eine Fahrausgabe angepassten Funktionsweise benutzt wird. Dadurch soll die Gefahr der Ablenkung durch die Datenbrille verringert werden.

Die DE 10 2014 206 623 A3 zeigt ein Verfahren zum Betreiben einer Datenbrille in einem Fahrzeug. Eine Anzeige der Datenbrille wird in Abhängigkeit von einem Sitzplatz eines Nutzers der Datenbrille gesteuert.

Die DE 10 2016 213 916 A1 zeigt ein Infotainmentsystem eines Kraftfahrzeugs, welches eine Datenbrille zur Darstellung einer virtuellen Realität aufweist, wobei die Datenbrille einem ganz bestimmten Sitzplatz zugeordnet werden kann.

Die DE 10 2016 003 019 A1 zeigt ein Anzeigesystem für ein Kraftfahrzeug und ein Verfahren zum Betreiben eines Anzeigesystems eines Kraftfahrzeugs. Die zumindest teiltransparente Anzeigefläche beispielsweise eines Head-up-Displays oder einer vom Fahrer getragenen Augmented-Reality-Brille soll es ermöglichen, dem Fahrer auf besonders verkehrssichere Weise mediale Inhalte zu präsentieren.

Die US 2018 / 0014182 A1 zeigt ein mobiles Terminal mit Display, das über eine Kommunikationseinheit mit einem Fahrzeug Informationen austauscht. In Abhängigkeit der erhaltenen Fahrinformationen des Fahrzeugs wird ein entsprechender Ausgabebildschirm gewählt.

Es ist die Aufgabe der vorliegenden Erfindung, eine Lösung bereitzustellen, mittels welcher auf besonders einfache Weise sichergestellt werden kann, dass ein Fahrer eines Kraftfahrzeugs nicht durch eine am Kopf getragene Anzeigeeinrichtung von seiner Fahraufgabe abgelenkt wird.

Diese Aufgabe wird durch ein Verfahren sowie durch eine Steuereinrichtung zum Betreiben einer am Kopf tragbaren Anzeigeeinrichtung in einem Kraftfahrzeug mit den Merkmalen der unabhängigen Patentansprüche gelöst. Vorteilhafte Ausgestaltungen mit zweckmäßigen und nicht-trivialen Weiterbildungen der Erfindung sind in den abhängigen Ansprüchen angegeben.

Bei dem erfindungsgemäßen Verfahren zum Betreiben einer am Kopf tragbaren Anzeigeeinrichtung in einem Kraftfahrzeug wird zumindest die Bedingung überprüft, ob sich außer einem Fahrer kein weiterer Fahrzeuginsasse im Kraftfahrzeug befindet, wenn das Kraftfahrzeug in keinem autonomen Fahrmodus betrieben wird. Im Sinne der Erfindung ist darunter zu verstehen, dass der Fahrer das Kraftfahrzeug vollständig selbst fährt. Darunter kann auch verstanden werden, dass bestimmte Assistenzsysteme bei der Fahrzeugbedienung helfen, beispielsweise ein Abstandsregeltempomat. Darunter kann auch verstanden werden, dass eine gewisse Teilautomatisierung beim Erfüllen der Fahraufgabe vorliegt. Funktionen wie ein automatisches Einparken, Spurhalten, allgemeine Lenkführung, Beschleunigen, Abbremsen, können ebenfalls von Assistenzsystemen übernommen werden, zum Beispiel von einem Stauassistenten.

Dass das Kraftfahrzeug in keinem autonomen Fahrmodus betrieben wird, kann beispielsweise die Autonomiestufen 0, 1 und 2 gemäß der Norm SAE J3016 betreffen. Unter einem autonomen Fahrmodus im Sinne der Erfindung ist also zu verstehen, dass beispielsweise eine Bedienungsautomatisierung vorliegt. Der Fahrer muss das System beispielsweise das Kraftfahrzeug nicht dauernd überwachen. Das Kraftfahrzeug führt selbstständig Funktionen wie das Auslösen des Blinkers, Spurwechsel und Spurhalten durch. Der Fahrer kann sich anderen Dingen zuwenden, wird aber bei Bedarf innerhalb einer Vorwarnzeit vom System aufgefordert, die Führung zu übernehmen. Eine Hochautomatisierung kann auch im Sinne der Erfindung darunter fallen, dass das Kraftfahrzeug in einem autonomen Fahrmodus betrieben wird. Die Führung des Kraftfahrzeugs wird dauerhaft von einem geeigneten System übernommen. Werden die Fahraufgaben vom System nicht mehr bewältigt, kann der Fahrer aufgefordert werden, die Führung zu übernehmen. Unter einem autonomen Fahrmodus kann auch verstanden werden, dass eine Vollautomatisierung vorliegt, bei der gar kein Fahrer erforderlich ist. Außer dem Festlegen des Ziels und dem Starten des Systems ist kein menschliches Eingreifen erforderlich.

Bei dem Kraftfahrzeug kann es sich grundsätzlich um ein Kraftfahrzeug handeln, welches selbst autonom fahren kann oder auch nicht autonom fahren kann. Wenn das Kraftfahrzeug in keinem autonomen Fahrmodus betrieben wird - sei es, weil das Kraftfahrzeug dazu gar nicht in der Lage ist oder weil gerade ein entsprechender Fahrmodus ausgewählt ist - und die Bedingung erfüllt ist, dass sich außer dem Fahrer kein weiterer Fahrzeuginsasse im Kraftfahrzeug befindet, wird eine der folgenden Einschränkungen an der am Kopf tragbaren Anzeigeeinrichtung hinsichtlich einer Anzeige von Inhalten vorgenommen: das Anzeigen jeglicher Inhalte wird unterbunden, wenn es sich bei der Anzeigeeinrichtung um eine Virtual-Reality-Brille handelt; ausschließlich das Anzeigen verkehrsrelevanter Inhalte wird mittels der Anzeigeeinrichtung ermöglicht, wenn es sich bei der Anzeigeeinrichtung um eine Augmented-Reality-Brille handelt.

Um das Risiko zu senken, dass der Fahrer bei alleiniger Fahrt irrtümlich oder bewusst seine Virtual-Reality-Brille oder Augmented-Reality-Brille nutzt und sich so gegebenenfalls vermeidbaren Risiken aussetzt, wird das Anzeigen jeglicher Inhalte unterbunden, wenn es sich bei der Anzeigeeinrichtung um eine Virtual-Reality-Brille handelt, wobei ausschließlich das Anzeigen verkehrsrelevanter Inhalte mittels der Anzeigeeinrichtung ermöglicht wird, wenn es sich bei der Anzeigeeinrichtung um eine Augmented-Reality-Brille handelt. Im Falle der Augmented-Reality-Brille wird dieser also so angesteuert, dass diese nur in einer an die Fahraufgabe angepassten Funktionsweise verwendet werden kann. Die Augmented-Reality-Brille kann in dem Fall beispielsweise Navigationshinweise, Geschwindigkeitshinweise und dergleichen anzeigen, das Anzeigen von Grafiken und/oder Videos, die rein zu Unterhaltungszwecken dienen, wird in dem Fall dann unterbunden. Im Falle der Virtual-Reality-Brille ist es sinnvoll, dass Anzeigen jeglicher Inhalte zu unterbinden, falls die oben genannte Bedingung erfüllt ist. Denn Virtual-Reality-Brillen schotten den Träger visuell vollständig von seiner Umgebung ab.

Der Erfindung liegt die Erkenntnis zugrunde, dass wenn hingegen ein Mitfahrer beziehungsweise Beifahrer erkannt wird, davon auszugehen ist, dass dieser die am Kopf tragbare Anzeigeeinrichtung selbst nutzt oder die Nutzung seitens des Fahrers unterbinden würde. Bei dem erfindungsgemäßen Verfahren ist es nicht erforderlich, über eine aufwändige Sensorik festzustellen, wo genau sich die am Kopf tragbare Anzeigeeinrichtung im Kraftfahrzeug befindet und von welchem Fahrzeuginsassen sie getragen wird. Mittels des erfindungsgemäßen Verfahrens ist es also auf besonders einfache und dennoch zuverlässige Weise möglich, zu verhindern, dass ein Fahrer durch das Tragen der am Kopf tragbaren Anzeigeeinrichtung von seiner eigentlichen Fahraufgabe abgelenkt wird, sofern das Kraftfahrzeug in keinem autonomen Fahrmodus betrieben wird.

Die Erfindung sieht vor, dass falls sich ein weiterer Fahrzeuginsasse im Kraftfahrzeug befindet, als weitere Bedingung überprüft wird, ob sich dieser Fahrzeuginsasse hinter jeweiligen Vordersitzen des Kraftfahrzeugs, insbesondere auf einer Rückbank des Kraftfahrzeugs, befindet, und nur falls diese weitere Bedingung erfüllt ist, das Anzeigen beliebiger Inhalte mittels der Anzeigeeinrichtung ermöglicht wird, wobei falls die weitere Bedingung nicht erfüllt ist, die Einschränkung vorgenommen wird. Letzteres bedeutet also, dass das Anzeigen jeglicher Inhalte im Falle der Virtual-Reality-Brille unterbunden und im Falle der Augmented-Reality-Brille ausschließlich für das Anzeigen verkehrsrelevanter Inhalte ermöglicht wird. Ist die Nutzung der am Kopf tragbare Anzeigeeinrichtung also beispielsweise nur auf der Rückbank erwünscht oder zulässig, wird im Falle von neben dem Fahrer weiterer vorhandener Fahrzeuginsasse überprüft, ob diese sich beispielsweise auf der Rückbank befinden. Die Einschränkung bezüglich der Widergabe beziehungsweise Anzeige von Inhalten mittels der Anzeigeeinrichtung erfolgt also, falls der zumindest eine weitere Fahrzeuginsasse sich nicht auf der Rückbank und stattdessen zum Beispiel auf dem Beifahrersitz befinden sollte. Wird hingegen festgestellt, dass der zumindest eine weitere Fahrzeuginsasse auf der Rückbank sitzt, so können mittels der am Kopf tragbaren Anzeigeeinrichtung jegliche Inhalte angezeigt werden. Durch diese Maßnahme ist es möglich, auf besonders zuverlässige Weise sicherzustellen, dass der Fahrer durch die am Kopf tragbare Anzeigeeinrichtung nicht von seiner Fahraufgabe abgelenkt werden kann. Denn in diesem Fall ist es schlichtweg nur möglich, die am Kopf tragbare Anzeigeeinrichtung zum Anzeigen beliebiger Inhalte auch nur dann zu verwenden beziehungsweise zu benutzen, wenn zumindest ein weiterer Fahrzeuginsasse hinter den Vordersitzen des Kraftfahrzeugs, beispielsweise auf einer Rückbank, platzgenommen hat.

Eine vorteilhafte Ausführungsform der Erfindung sieht vor, dass das Anzeigen jeglicher Inhalte im Falle der Virtual-Reality-Brille unterbunden wird, indem eine Datenübertragung von anzeigbaren Inhalten vom Kraftfahrzeug und/oder von einer anderen Datenquelle an die Virtual-Reality-Brille unterbunden wird. Bilddaten und/oder Videodaten können beispielsweise von einem fahrzeugseitigen Infotainmentsystem an die Virtual-Reality-Brille übertragen werden. Sofern das Anzeigen jeglicher Inhalte bei der Virtual-Reality-Brille unterbunden werden soll, kann beispielsweise eine entsprechende Datenverbindung zwischen dem Infotainmentsystem und der Virtual-Reality-Brille so lange unterbrochen werden, solange die Bedingung erfüllt ist, dass sich außer dem Fahrer kein weiterer Fahrzeuginsasse im Kraftfahrzeug befindet. Im Falle der Augmented-Reality-Brille ist es beispielsweise möglich, dass brillenseitig oder auch fahrzeugseitig nur die Übertragung verkehrsrelevanter Inhalte an die Augmented-Reality-Brille ermöglicht wird, solange die besagte Einschränkung vorgenommen werden soll. Auch ist es möglich, dass die am Kopf tragbare Anzeigeeinrichtung die anzuzeigenden Daten beispielsweise von einem Smartphone oder einer anderen nicht-fahrzeugseitig fest verbauten Einrichtung erhält. In dem Fall kann die Datenübertragung von anzeigbaren Inhalten im Falle der Virtual-Reality-Brille ebenfalls unterbunden oder im Falle der Augmented-Reality-Brille entsprechend gefiltert werden.

Gemäß einer weiteren vorteilhaften Ausführungsform der Erfindung ist es vorgesehen, dass das Anzeigen jeglicher Inhalte im Falle der Virtual-Reality-Brille unterbunden wird, indem die Virtual-Reality-Brille deaktiviert wird. Auf diese Weise kann besonders zuverlässig sichergestellt werden, dass mittels der Virtual-Reality-Brille im Falle der besagten Einschränkung gar keine Inhalte angezeigt werden können. Sollte der Fahrer die Virtual-Reality-Brille aufgesetzt haben, während das Kraftfahrzeug in keinem autonomen Fahrmodus betrieben wird, würde er höchstwahrscheinlich die Virtual-Reality-Brille absetzen beziehungsweise abnehmen, da diese ja dann deaktiviert ist.

In weiterer vorteilhafter Ausgestaltung der Erfindung ist es vorgesehen, dass mittels einer Sitzbelegungserkennung überprüft wird, ob sich außer dem Fahrer kein weiterer Fahrzeuginsasse im Kraftfahrzeug befindet. Dafür können entsprechende Sitzbelegungssensoren im Kraftfahrzeug verwendet werden. Auch die Überprüfung, ob sich ein gegebenenfalls weiterer Fahrzeuginsasse hinter jeweiligen Vordersitzen des Kraftfahrzeugs befindet, kann ebenfalls mittels der Sitzbelegungserkennung überprüft werden. Mittels der Sitzbelegungserkennung ist es auf einfache Weise möglich, zu überprüfen, ob und wo sich Fahrzeuginsassen im Kraftfahrzeug befinden.

Eine weitere vorteilhafte Ausführungsform der Erfindung sieht vor, dass ein Öffnen und Schließen von Fahrzeugtüren des Kraftfahrzeugs überwacht und basierend darauf überprüft wird, ob sich außer dem Fahrer kein weiterer Fahrzeuginsasse im Kraftfahrzeug befindet. Auf diese Weise kann auch überprüft werden, ob ein weiterer Fahrzeuginsasse beispielsweise auf der Rückbank oder auf einem Beifahrersitz platzgenommen hat. Durch die Überwachung von Öffnungs- und Schließbewegungen der Fahrzeugtüren kann auf einfache Weise überprüft werden, wo höchstwahrscheinlich bestimmte Fahrzeuginsassen platzgenommen haben.

Gemäß einer weiteren vorteilhaften Ausführungsform der Erfindung ist es vorgesehen, dass ein Öffnen und Schließen von Gurtschlössern des Kraftfahrzeugs überwacht und basierend darauf überprüft wird, ob sich außer dem Fahrer kein weiterer Fahrzeuginsasse im Kraftfahrzeug befindet. Ganz allgemein ist es durch die Überprüfung beziehungsweise Überwachung der Gurtschlösser des Kraftfahrzeugs möglich, ziemlich zuverlässig zu bestimmen, ob und wo bestimmte Fahrzeuginsassen im Kraftfahrzeug platzgenommen haben.

Eine weitere vorteilhafte Ausführungsform der Erfindung sieht vor, dass kamerabasiert überprüft wird, ob sich außer dem Fahrer kein weiterer Fahrzeuginsasse im Kraftfahrzeug befindet. Es kann auch kamerabasiert überprüft beziehungsweise überwacht werden, wo gegebenenfalls vorhandene Fahrzeuginsassen im Kraftfahrzeug platzgenommen haben. Ganz allgemein können im Kraftfahrzeug verbaute Sensoren zur Fahrzeugbelegungs- und/oder Fahrerzustandserkennung, zum Beispiel in Form von Kameras, dazu verwendet werden, den Fahrer selber oder weitere Fahrzeuginsassen und ihre Positionierung im Kraftfahrzeug zu erfassen.

Die erfindungsgemäße Steuereinrichtung zum Betreiben einer am Kopf tragbaren Anzeigeeinrichtung in einem Kraftfahrzeug ist dazu eingerichtet, das erfindungsgemäße Verfahren oder eine vorteilhafte Ausführungsform des erfindungsgemäßen Verfahrens durchzuführen. Vorteilhafte Ausgestaltungen des erfindungsgemäßen Verfahrens sind als vorteilhafte Ausgestaltungen der erfindungsgemäßen Steuereinrichtung und umgekehrt anzusehen, wobei die Steuereinrichtung insbesondere Mittel zur Durchführung der Verfahrensschritte aufweist. Die Steuereinrichtung kann beispielsweise eine oder mehrere Datenschnittstellen aufweisen, über welche die Steuereinrichtung mit verschiedensten Sensoren beziehungsweise Erfassungseinrichtungen verbunden werden kann, die zur Überprüfung der oben genannten Bedingungen verwendet werden können.

Das erfindungsgemäße Kraftfahrzeug umfasst die erfindungsgemäße Steuereinrichtung oder eine vorteilhafte Ausführungsform der erfindungsgemäßen Steuereinrichtung. Gemäß einem weiteren unabhängigen Aspekt der Erfindung kann es auch vorgesehen sein, dass die am Kopf tragbare Anzeigeeinrichtung selbst die Steuereinrichtung aufweist.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftfahrzeugs, in welchem in Fahrer mit einer aufgesetzten Virtual-Reality-Brille sitzt;
- Fig. 2: eine weitere schematische Darstellung des Kraftfahrzeugs, wobei neben dem Fahrer noch ein weiterer Fahrzeuginsasse auf einem Beifahrersitz platzgenommen hat; und in
- Fig. 3: eine weitere schematische Darstellung des Kraftfahrzeugs, wobei der weitere Fahrzeuginsasse auf einer Rücksitzbank des Kraftfahrzeugs platzgenommen hat.

In den Figuren sind gleiche oder funktionsgleiche Elemente mit den gleichen Bezugszeichen versehen worden.

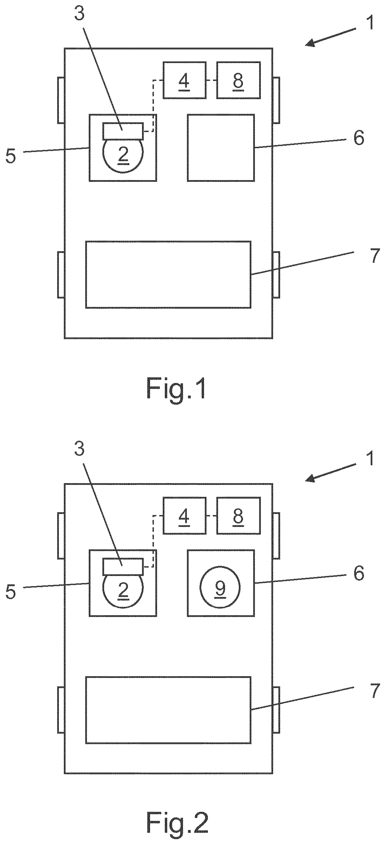

Ein Kraftfahrzeug 1 ist in einer schematischen Darstellung in Fig. 1 gezeigt. In dem Kraftfahrzeug 1 sitzt ein Fahrer 2, der eine Virtual-Reality-Brille 3 aufgesetzt hat. Die Virtual-Reality-Brille 3 ist signaltechnisch beziehungsweise datentechnisch mit einer Steuereinrichtung 4 verbunden, welche dazu eingerichtet ist, die Virtual-Reality-Brille 3 anzusteuern. Die Datenverbindung erfolgt vorzugsweise drahtlos. Der Fahrer 2 sitzt auf einem Fahrersitz 5, wobei ein Beifahrersitz 6 und eine Rückbank 7 des Kraftfahrzeugs 1 unbelegt sind.

Nachfolgend wird ein Verfahren zum Betreiben der Virtual-Reality-Brille 3 im Kraftfahrzeug 1 näher beschrieben. Wenn das Kraftfahrzeug 1 in keinem autonomen Fahrmodus betrieben wird, wird mittels der Steuereinrichtung 4 zumindest die Bedingung überprüft, ob sich außer dem Fahrer 2 kein weiterer Fahrzeuginsasse im Kraftfahrzeug 1 befindet. Um dies zu überprüfen ist eine Erfassungseinrichtung 8 im Kraftfahrzeug 1 verbaut beziehungsweise angeordnet.

Die Erfassungseinrichtung 8 kann beispielsweise eine Sitzbelegungserkennung über entsprechende Sitzbelegungssensoren vornehmen, um zu überprüfen, ob sich außer dem Fahrer 2 kein weiterer Fahrzeuginsasse im Kraftfahrzeug 1 befindet. Die Erfassungseinrichtung 8 kann auch entsprechende Sensoren aufweisen, welche dazu ausgelegt sind, ein Öffnen und Schließen von Fahrzeugtüren des Kraftfahrzeugs 1 zu überprüfen beziehungsweise zu überwachen, sodass die Steuereinrichtung 4 basierend darauf überprüfen kann, ob sich außer dem Fahrer 2 kein weiterer Fahrzeuginsasse im Kraftfahrzeug 1 befindet.

Die Erfassungseinrichtung 8 kann auch entsprechende Sensoren aufweisen, die die Überwachung eines Öffnens und Schließens von Gurtschlössern des Kraftfahrzeugs 1 überwachen können, wobei die Steuereinrichtung 4 basierend darauf überprüfen kann ob sich außer dem Fahrer 2 kein weiterer Fahrzeuginsasse im Kraftfahrzeug 1 befindet. Zudem kann die Erfassungseinrichtung 8 noch eine oder mehrere Kameras aufweisen, sodass die Erfassungseinrichtung 8 bzw. Steuereinrichtung 4 kamerabasiert überprüfen kann, ob sich außer dem Fahrer 2 kein weiterer Fahrzeuginsasse im Kraftfahrzeug 1 befindet. Ganz allgemein kann die Erfassungseinrichtung 8 die Steuereinrichtung 4 mit verschiedensten Sensordaten hinsichtlich der Fahrzeugbelegung versorgen, sodass die Steuereinrichtung 4 basierend auf diesen Sensordaten die Bedingung überprüfen kann, ob sich außer dem Fahrer 2 kein weiterer Fahrzeuginsasse im Kraftfahrzeug befindet.

Falls diese Bedingung erfüllt ist, nimmt die Steuereinrichtung 4 folgende Einschränkungen an der Virtual-Reality-Brille 3 vor: Das Anzeigen jeglicher Inhalte mittels der Virtual-Reality-Brille 3 wird unterbunden. Sitzt also der Fahrer 2 alleine im Kraftfahrzeug 1, ist es schlichtweg unmöglich, dass er sich mittels der Virtual-Reality-Brille 3 irgendwelche Inhalte anzeigen lässt, solange das Kraftfahrzeug 1 in keinem autonomen Fahrmodus betrieben wird. Der Fahrer 2 wird also die Virtual-Reality-Brille 3 dann zwangläufig absetzen, sodass er ohne jegliche Ablenkung seine eigentliche Fahraufgabe wahrnehmen kann.

Es ist auch möglich, dass es sich nicht um die Virtual-Reality-Brille 3 sondern um eine Augmented-Reality-Brille handelt. In dem Fall wird ausschließlich das Anzeigen verkehrsrelevanter Inhalte mittels der Anzeigeeinrichtung ermöglicht. Mittels der Augmented-Reality-Brille können dann also nur solche Inhalte angezeigt werden, die den Fahrer 2 beim Wahrnehmen seiner Fahraufgabe unterstützen, indem beispielsweise Navigationshinweise, Geschwindigkeitshinweise und dergleichen, aber keinerlei unterhaltende Inhalte angezeigt werden.

In Fig. 2 ist das Kraftfahrzeug 1 in einer weiteren schematischen Darstellung gezeigt, wobei ein weiterer Fahrzeuginsasse 9 auf dem Beifahrersitz 6 platzgenommen hat. In dem Fall kann es vorgesehen sein, dass die besagte Einschränkung an der Virtual-Reality-Brille 3 - beziehungsweise an der Augmented-Reality-Brille - nicht vorgenommen wird. Es kann davon ausgegangen werden, dass der weitere Fahrzeuginsasse 9 den Fahrer 2 dazu anhalten wird, die Virtual-Reality-Brille 3 abzunehmen. Oder entgegen der vorliegenden Darstellung kann es auch sein, dass der Fahrzeuginsasse 9, der auf dem Beifahrersitz 6 platzgenommen hat, die Virtual-Reality-Brille 3 aufgesetzt hat, sodass es gar keinen Bedarf dafür gibt, die Funktionsweise der Virtual-Reality-Brille 3 in der vorstehend genannten Weise einzuschränken. Gleiches gilt dann auch für die Augmented-Reality-Brille, die zuvor schon erwähnt wurde.

Es ist aber auch möglich, dass falls sich der weitere Fahrzeuginsasse 9 im Kraftfahrzeug 1 befindet, als weitere Bedingung überprüft wird, ob sich dieser Fahrzeuginsasse 9 hinter den Vordersitzen 5, 6 des Kraftfahrzeugs 1, insbesondere auf der Rückbank 7, befindet, wobei nur falls diese weitere Bedingung erfüllt ist, das Anzeigen beliebiger Inhalte mittels der Virtual-Reality-Brille 3 - oder mittels der Augmented-Reality-Brille - ermöglicht wird. Falls diese weitere Bedingung nicht erfüllt sein sollte, werden die besagten Einschränkungen vorgenommen. Es kann also auch vorgesehen sein, dass die Virtual-Reality-Brille 3 - beziehungsweise die Augmented-Reality-Brille - gar nicht von Fahrzeuginsassen, die auf den Vordersitzen 5, 6 platzgenommen haben, verwendet werden können. Dadurch kann auf besonders zuverlässige Weise verhindert werden, dass der Fahrer 2 gegebenenfalls durch Tragen der Virtual-Reality-Brille 3 beziehungsweise durch Tragen der Augmented-Reality-Brille von seiner Fahraufgabe abgelenkt wird, sofern das Kraftfahrzeug 1 in keinem autonomen Fahrmodus betrieben wird.

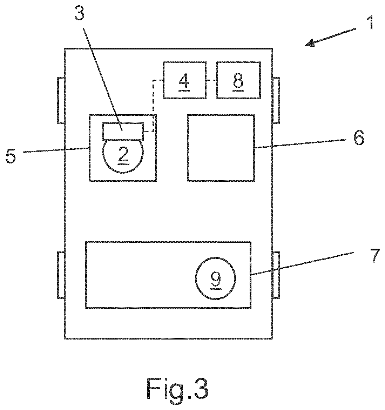

In Fig. 3 ist das Kraftfahrzeug 1 in einer weiteren schematischen Darstellung gezeigt, wobei der Fahrzeuginsasse 9 nun auf der Rückbank 7 platzgenommen hat. In diesem Fall erfolgt also keinerlei Einschränkung bezüglich der Funktionsweise der Virtual-Reality-Brille 3 beziehungsweise der Augmented-Reality-Brille. Entgegen der vorliegenden Darstellung könnte es auch sein, dass die Virtual-Reality-Brille 3 beziehungsweise Augmented-Reality-Brille vom Fahrzeuginsassen 9 aufgesetzt ist.

Die Unterbindung des Anzeigens jeglicher Inhalte im Falle der Virtual-Reality-Brille 3 kann beispielsweise dadurch erfolgen, dass die Steuereinrichtung 4 eine Datenübertragung von anzeigbaren Inhalten vom Kraftfahrzeug 1 und/oder von anderen Datenquellen, beispielsweise von einem Smartphone, einem Tabletcomputer - über eine Internetverbindung oder dergleichen an - an die Virtual-Reality-Brille 3 unterbindet. Auch ist es möglich, dass das Anzeigen jeglicher Inhalte im Falle der Virtual-Reality-Brille 3 unterbunden wird, indem die Virtual-Reality-Brille 3 durch die Steuereinrichtung 4 deaktiviert wird. Im Falle der Augmented-Reality-Brille kann beispielsweise eine Datenübertragung der Augmented-Reality-Brille so gefiltert werden, dass nur verkehrsrelevante Inhalte an die Augmented-Reality-Brille übertragen werden. Alternativ ist es auch möglich, dass einfach in die Steuerung der Augmented-Reality-Brille so eingegriffen wird, dass diese nur verkehrsrelevante Inhalte anzeigen kann, sofern diese Einschränkung gelten soll. Die Steuereinrichtung 4 kann Teil des Kraftfahrzeugs 1 sein. Alternativ ist es aber auch möglich, dass die Steuereinrichtung 4 Teil der Virtual-Reality-Brille 3 beziehungsweise der Augmented-Reality-Brille ist.

Durch das erläuterte Verfahren und die erläuterte Steuereinrichtung 4 ist es also auf besonders einfache und zuverlässige Weise möglich, zu verhindern, dass bei einem nicht-autonomen Fahrbetrieb des Kraftfahrzeugs 1 der Fahrer 2 durch Tragen der Virtual-Reality-Brille 3 beziehungsweise durch Tragen der Augmented-Reality-Brille von seiner eigentlichen Fahraufgabe abgelenkt wird.

## Patentansprüche

1. Verfahren zum Betreiben einer am Kopf tragbaren Anzeigeeinrichtung in einem Kraftfahrzeug (1), **dadurch gekennzeichnet, dass** zumindest die Bedingung überprüft wird,
ob sich außer einem Fahrer (2) kein weiterer Fahrzeuginsasse (9) im Kraftfahrzeug (1) befindet, wenn das Kraftfahrzeug (1) in keinem autonomen Fahrmodus betrieben wird, und falls diese Bedingung erfüllt ist, folgende Einschränkung an der Anzeigeeinrichtung hinsichtlich einer Anzeige von Inhalten vorgenommen wird:
- das Anzeigen jeglicher Inhalte wird unterbunden, wenn es sich bei der Anzeigeeinrichtung um eine Virtual-Reality-Brille (3) handelt; oder
- ausschließlich das Anzeigen verkehrsrelevanter Inhalte wird mittels der Anzeigeeinrichtung ermöglicht, wenn es sich bei der Anzeigeeinrichtung um eine Augmented-Reality-Brille handelt;
wobei, falls sich ein weiterer Fahrzeuginsasse (9) im Kraftfahrzeug (1) befindet, als weitere Bedingung überprüft wird, ob sich dieser Fahrzeuginsasse (9) hinter jeweiligen Vordersitzen des Kraftfahrzeugs (1) befindet, und nur falls diese weitere Bedingung erfüllt ist, das Anzeigen beliebiger Inhalte mittels der Anzeigeeinrichtung ermöglicht wird, wobei falls die weitere Bedingung nicht erfüllt ist, die Einschränkung vorgenommen wird.

2. Verfahren nach Anspruch 1, wobei als die weitere Bedingung überprüft wird, ob sich dieser Fahrzeuginsasse (9) auf einer Rückbank (7) des Kraftfahrzeugs (1) befindet.

3. Verfahren nach Anspruch 1 oder 2,
**dadurch gekennzeichnet, dass**
das Anzeigen jeglicher Inhalte im Falle der Virtual-Reality-Brille (3) unterbunden wird, indem eine Datenübertragung von anzeigbaren Inhalten vom Kraftfahrzeug (1) und/oder von einer anderen Datenquelle an die Virtual-Reality-Brille (3) unterbunden wird.

4. Verfahren nach einem der vorhergehenden Ansprüche,
**dadurch gekennzeichnet, dass**
das Anzeigen jeglicher Inhalte im Falle der Virtual-Reality-Brille (3) unterbunden wird, indem die Virtual-Reality-Brille (3) deaktiviert wird.

5. Verfahren nach einem der vorhergehenden Ansprüche,
**dadurch gekennzeichnet, dass**
mittels einer Sitzbelegungserkennung überprüft wird, ob sich außer dem Fahrer (2) kein weiterer Fahrzeuginsasse (9) im Kraftfahrzeug (1) befindet.

6. Verfahren nach einem der vorhergehenden Ansprüche,
**dadurch gekennzeichnet, dass**
ein Öffnen und Schließen von Fahrzeugtüren des Kraftfahrzeugs (1) überwacht und basierend darauf überprüft wird, ob sich außer dem Fahrer (2) kein weiterer Fahrzeuginsasse (9) im Kraftfahrzeug (1) befindet.

7. Verfahren nach einem der vorhergehenden Ansprüche,
**dadurch gekennzeichnet, dass**
ein Öffnen und Schließen von Gurtschlössern des Kraftfahrzeugs (1) überwacht und basierend darauf überprüft wird, ob sich außer dem Fahrer (2) kein weiterer Fahrzeuginsasse (9) im Kraftfahrzeug (1) befindet.

8. Verfahren nach einem der vorhergehenden Ansprüche,
**dadurch gekennzeichnet, dass**
kamerabasiert überprüft wird, ob sich außer dem Fahrer (2) kein weiterer Fahrzeuginsasse (9) im Kraftfahrzeug (1) befindet.

9. Steuereinrichtung (4) zum Betreiben einer am Kopf tragbaren Anzeigeeinrichtung in einem Kraftfahrzeug (1), welche dazu eingerichtet ist, ein Verfahren nach einem der vorhergehenden Ansprüche durchzuführen.

10. Kraftfahrzeug (1) mit einer Steuereinrichtung (4) nach Anspruch 9.

## Claims

1. A method for operating a display device wearable at the head in a motor vehicle (1), **characterized in that**
at least the condition is examined
if a further vehicle occupant (9) except for a driver (2) is not in the motor vehicle (1) if the motor vehicle (1) is not operated in an autonomous drive mode, and if this condition is satisfied, the following restriction is performed at the display device with respect to a display of contents:
- the display of any contents is prevented if the display device is virtual reality goggles (3); or
- exclusively the display of contents relevant to traffic by means of the display device is allowed if the display device is augmented reality goggles;
wherein, if a further vehicle occupant (9) is in the motor vehicle (1), it is examined as a further condition if this vehicle occupant (9) is behind respective front seats of the motor vehicle (1), and only if this further condition is satisfied, the display of any contents by means of the display device is allowed, wherein, if the further condition is not satisfied, the restriction is performed.

2. The method according to claim 1, wherein it is examined as the further condition if this vehicle occupant (9) is on a rear bench seat (7) of the motor vehicle (1).

3. The method according to claim 1 or 2,
**characterized in that**
the display of any contents is prevented in case of the virtual reality goggles (3) **in that** data transfer of displayable contents from the motor vehicle (1) and/or from another data source to the virtual reality goggles (3) is prevented.

4. The method according to any one of the preceding claims,
**characterized in that**
the display of any contents is prevented in case of the virtual reality goggles (3) **in that** the virtual reality goggles (3) are deactivated.

5. The method according to any one of the preceding claims,
**characterized in that**
by means of a seat occupancy recognition, it is examined if a further vehicle occupant (9) except for the driver (2) is not in the motor vehicle (1).

6. The method according to any one of the preceding claims,
**characterized in that**
opening and closing of vehicle doors of the motor vehicle (1) are monitored and it is examined based thereon if a further vehicle occupant (9) except for the driver (2) is not in the motor vehicle (1).

7. The method according to any one of the preceding claims,
**characterized in that**
opening and closing of belt buckles of the motor vehicle (1) are monitored and it is examined based thereon if a further vehicle occupant (9) except for the driver (2) is not in the motor vehicle (1).

8. The method according to any one of the preceding claims,
**characterized in that**
it is examined based on camera if a further vehicle occupant (9) except for the driver (2) is not in the motor vehicle (1).

9. A control device (4) for operating a display device wearable at the head in a motor vehicle (1), which is configured to perform a method according to any one of the preceding claims.

10. A motor vehicle (1) with a control device (4) according to claim 9.

## Revendications

1. Procédé pour faire fonctionner un dispositif d'affichage pouvant être porté sur la tête dans un véhicule à moteur (1), **caractérisé en ce que**
il est au moins vérifié la condition selon laquelle
aucun occupant de véhicule (9) autre qu'un conducteur (2) ne se trouve dans le véhicule à moteur (1) lorsque le véhicule à moteur (1) ne fonctionne dans aucun mode de conduite autonome, et si cette condition est satisfaite, la restriction suivante concernant un affichage de contenu est appliquée au dispositif d'affichage :
- l'affichage de tout contenu est interrompu lorsque le dispositif d'affichage comprend des lunettes de réalité virtuelle (3) ; ou
- le dispositif d'affichage permet l'affichage de contenu pertinent pour le trafic exclusivement, lorsque le dispositif d'affichage comprend des lunettes de réalité augmentée ;
si un autre occupant de véhicule (9) se trouve dans le véhicule à moteur (1), il est vérifié à titre de condition supplémentaire que cet occupant de véhicule (9) se trouve derrière des sièges avant respectifs du véhicule à moteur (1), et l'affichage de tout contenu au moyen du dispositif d'affichage est permis uniquement si cette condition supplémentaire est satisfaite, la restriction étant appliquée si la condition supplémentaire n'est pas satisfaite.

2. Procédé selon la revendication 1, dans lequel il est vérifié à titre de condition supplémentaire que cet occupant de véhicule (9) se trouve sur une banquette arrière (7) du véhicule à moteur (1).

3. Procédé selon la revendication 1 ou 2,
**caractérisé en ce que**
l'affichage de tout contenu est interrompu dans le cas de lunettes de réalité virtuelle (3), une transmission de données de contenu affichable à partir du véhicule à moteur (1) et/ou à partir d'une autre source de données aux lunettes de réalité virtuelle (3) étant interrompue.

4. Procédé selon l'une des revendications précédentes,
**caractérisé en ce que**
l'affichage de tout contenu est interrompu dans le cas de lunettes de réalité virtuelle (3), les lunettes de réalité virtuelle (3) étant désactivés.

5. Procédé selon l'une des revendications précédentes,
**caractérisé en ce que**
il est vérifié au moyen d'une détection d'occupation de siège qu'aucun occupant de véhicule (9) autre que le conducteur (2) ne se trouve dans le véhicule à moteur (1).

6. Procédé selon l'une des revendications précédentes,
**caractérisé en ce que**
une ouverture et une fermeture des portières de véhicule du véhicule à moteur (1) est surveillée et il est vérifié, sur la base de cette surveillance, qu'aucun occupant de véhicule (9) autre que le conducteur (2) ne se trouve dans le véhicule à moteur (1).

7. Procédé selon l'une des revendications précédentes,
**caractérisé en ce que**
une ouverture et une fermeture de boucles de ceinture de sécurité du véhicule à moteur (1) est surveillée et il est vérifié, sur la base de cette surveillance, qu'aucun occupant de véhicule (9) autre que le conducteur (2) ne se trouve dans le véhicule à moteur (1).

8. Procédé selon l'une des revendications précédentes,
**caractérisé en ce que**
il est vérifié au moyen d'un système à base de caméras qu'aucun occupant de véhicule (9) autre que le conducteur (2) ne se trouve dans le véhicule à moteur (1).

9. Dispositif de commande (4) pour faire fonctionner un dispositif d'affichage pouvant être porté sur la tête dans un véhicule à moteur (1), qui est configuré pour mettre en oeuvre un procédé selon l'une des revendications précédentes.

10. Véhicule à moteur (1) comportant un dispositif de commande (4) selon la revendication 9.
